# EUROPEAN PATENT APPLICATION

(11) **EP 4 645 050 A1**
(43) Date of publication of application: **05.11.2025**
(21) Application number: 23911807.8
(22) Date of filing: 18.12.2023
(51) Int. Cl.: G06F 3/04845, G06T 19/00

(54) **VIRTUAL OBJECT OPERATION DEVICE, PROGRAM FOR SAME, AND VIRTUAL OBJECT DISPLAY SYSTEM**

(30) Priority: 26.12.2022 JP 2022208575
(71) Applicant: National Institute of Information and Communications Technology, Koganei-shi, Tokyo 184-8795 (JP)
(72) Inventor: IHARA, Toshiyuki, Koganei-shi, Tokyo 184-8795 (JP)
(74) Representative: Reichert & Lindner Partnerschaft Patentanwälte
(86) International application number: PCT/JP2023/045210
(87) International publication number: WO 2024/143026

(57) **Abstract**

A virtual object operation device (1) comprises: an MR video generation unit (15) that generates an MR video obtained by superimposing a virtual object and a video of a designated gaze direction in a spherical panorama video inputted from a spherical panorama camera for imaging the real world; an operation instruction input unit (13) for inputting an operation instruction for the virtual object on the MR video generated by the MR video generation unit (15); an operation unit (141) that subjects the virtual object to an operation corresponding to the operation instruction; a control information transmission unit (11) that transmits, as control information, position information of the virtual object operated by the operation unit (141) to a HMD; and a control information reception unit (12) that receives, as control information, position information pertaining to the position where the virtual object was operated by the HMD.

## Description

### TECHNICAL FIELD

The present invention relates to a virtual object manipulation device for manipulating a virtual object, a program thereof, and a virtual object display system.

### BACKGROUND ART

In recent years, mixed-reality technology for superimposing a virtual object on real-world images obtained by capturing real space has advanced, making it possible to display a video obtained by seamlessly fusing an image of the real world and an image of the virtual object (hereinafter, "mixed-reality video").
In the mixed-reality technology, a user wearing a head-mounted display (hereinafter, an "HMD") may recognize a virtual object through an image displayed on the HMD.
In recent years, the HMD has become capable of hand tracking, that is, tracking a movement of a hand or finger of a user wearing the HMD and allowing a virtual object in a mixed-reality video to be moved freely (for example, see Non-patent Literature 1).
Further, a technique has been disclosed in which an HMD is used in Web conferencing or the like and one of two users, who are at different locations, wears the HMD and shares a mixed-reality video that is displayed on the HMD (for example, see Patent Literature 1).

### Citation List

### Patent Literature

Patent Literature 1: Japanese Unexamined Patent Application Publication No. 2017-033575

### Non-Patent Literature

Non-patent Literature 1: "Hololens 2" ("Hololens" is a registered trademark), online page, Microsoft Corporation, [retrieved on December 6, 2022], the Internet <URL: https://www.microsoft.com/ja-jp/hololens>

### SUMMARY OF INVENTION

### Technical Problem

In the conventional technique described in Patent Literature 1, only the user wearing the HMD may view a mixed-reality video. The user not wearing the HMD may only watch the mixed-reality video that has been shared on another display device and may not manipulate a virtual object.
An object of the present invention is to provide a virtual object manipulation device, a program thereof, and a virtual object display system that enables a user to manipulate a virtual object in a mixed-reality video even when that user is not wearing an HMD.

### Solution to Problem

In order to solve the above problem, a virtual object manipulation device according to the present invention is a virtual object manipulation device for manipulating a virtual object in synchronization with an HMD that displays a mixed-reality video obtained by superimposing the virtual object on a real world or a video of the real world. The virtual object manipulation device is configured to include a mixed-reality video generation part, a manipulation instruction input part, a manipulation part, a control information transmission part, and a control information reception part.

In this configuration, the virtual object manipulation device generates, with the mixed-reality video generation part, a mixed-reality video in which the virtual object is superimposed on a video in a specified line-of-sight direction from an omnidirectional video that is input from an omnidirectional camera that captures the real world. The mixed-reality video is a video from a viewpoint that is different from that of the HMD.
Further, the virtual object manipulation device receives, with the manipulation instruction input part, a manipulation instruction, in a form of an operation of a mouse or the like, to manipulate the virtual object in the mixed-reality video generated by the mixed-reality video generation part. Further, the virtual object manipulation device performs, with the manipulation part, manipulation, such as movement or rotation, that corresponds to the manipulation instruction on the virtual object. This enables a user to manipulate the virtual object even when the user is not wearing the HMD.
Further, the virtual object manipulation device transmits, with the control information transmission part, position information of the virtual object that has been manipulated by the manipulation part to the HMD as control information. Further, the virtual object manipulation device receives, with the control information reception part, position information of the virtual object that has been manipulated by the HMD as control information. This enables the virtual object manipulation device to synchronize a position of the virtual object with the HMD.
The virtual object manipulation device may be operated by a virtual object manipulation program for causing a computer to function as the above-described parts.

In order to solve the above problem, a virtual object display system according to the present invention includes a plurality of virtual object manipulation devices and an omnidirectional camera connected to at least one of the plurality of virtual object manipulation devices.

In this configuration, the virtual object display system shares the mixed-reality video in a specified line-of-sight direction from the omnidirectional camera among the plurality of virtual object manipulation devices.
This enables each user of the plurality of virtual object manipulation devices to manipulate a virtual object in the shared mixed-reality video without wearing the HMD, and to visually recognize the mixed-reality video with a viewpoint at a position of the omnidirectional camera.

### Advantageous Effects of Invention

According to the present invention, a virtual object in a mixed-reality video may be manipulated even by a user not wearing an HMD.

### BRIEF DESCRIPTION OF DRAWINGS

FIG. 1 is a configuration diagram showing an overall configuration of a virtual object display system according to a first embodiment of the present invention.
FIG. 2 is a diagram showing an example of a mixed-reality video that is visually recognized on a monitor by a user who is not wearing an HMD.
FIG. 3 is a diagram showing an example of a mixed-reality video visually recognized by a user wearing an HMD via the HMD.
FIG. 4 is a block configuration diagram showing a configuration of a virtual object manipulation device shown in FIG. 1.
FIG. 5A is an explanatory diagram for explaining a procedure of viewpoint change.
FIG. 5B is an explanatory diagram for explaining the procedure of viewpoint change.
FIG. 5C is an explanatory diagram for explaining the procedure of viewpoint change.
FIG. 5D is an explanatory diagram for explaining the procedure of viewpoint change.
FIG. 6 is a block configuration diagram showing a configuration of an HMD shown in FIG. 1.
FIG. 7 is a flowchart showing an operation of the virtual object display system according to the first embodiment of the present invention.
FIG. 8 is a flowchart showing operational steps of a mixed-reality video generation process of the virtual object manipulation device shown in FIG. 7.
FIG. 9 is a flowchart showing operational steps of a mixed-reality video generation process of the HMD shown in FIG. 7.
FIG. 10 is a flowchart showing operational steps of a movement process of moving a virtual object by a user of the virtual object manipulation device.
FIG. 11 is a flowchart showing operational steps of a viewpoint position change process.
FIG. 12 is a flowchart showing operational steps of a line-of-sight direction change process.
FIG. 13 is a flowchart showing operational steps of a movement process of moving a virtual object by a user of the HMD.
FIG. 14 is a configuration diagram showing an overall configuration of a virtual object display system according to a second embodiment of the present invention.
FIG. 15 is a diagram showing an example of a mixed-reality video visually recognized on a monitor by a user who is not wearing an HMD.
FIG. 16 is a block configuration diagram showing a configuration of a virtual object manipulation device shown in FIG. 14.
FIG. 17 is a flowchart showing an operation of the virtual object display system according to the second embodiment of the present invention.
FIG. 18 is a flowchart showing operational steps of a panel object manipulation process.
FIG. 19 is a configuration diagram showing an example (a first example) of a virtual object display system that uses a PC.
FIG. 20 is a configuration diagram showing an example (a second example) of a virtual object display system that uses a PC.
FIG. 21 is a configuration diagram showing an example (a third example) of a virtual object display system that uses a PC.

### DESCRIPTION OF EMBODIMENTS

A virtual object display system according to an embodiment of the present invention will be described below with reference to the drawings.

### <First Embodiment>

### [Overall Configuration of Virtual Object Display System]

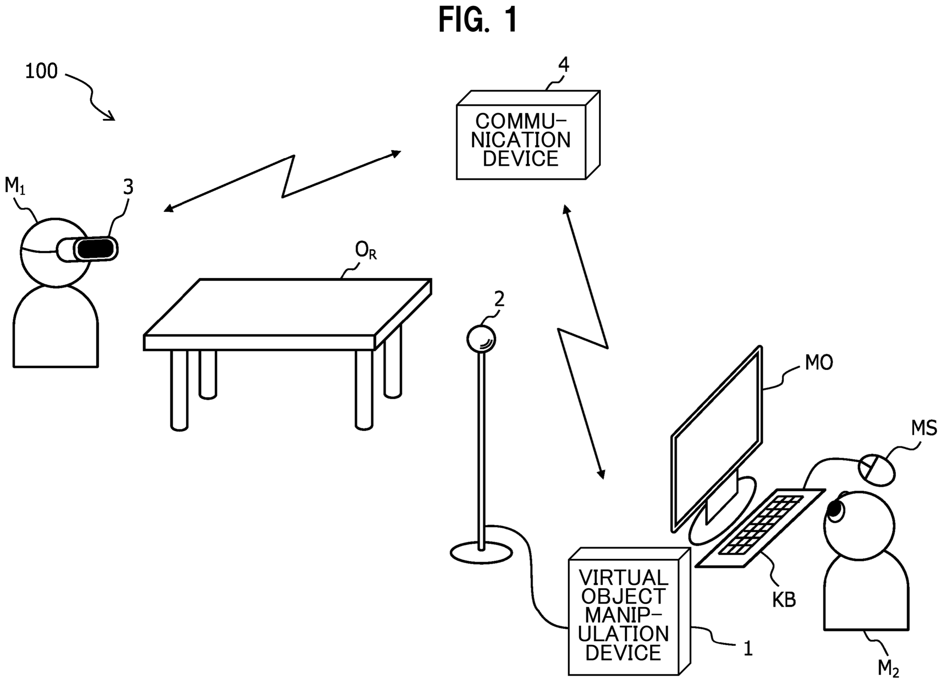

An overall configuration of a virtual object display system 100 according to a first embodiment of the present invention will be described with reference to FIG. 1.

The virtual object display system 100 is configured to present, to a user M₁ wearing an HMD 3, a mixed-reality (MR) video in which a virtual object is drawn superimposed on the real world. Also, the virtual object display system 100 is configured to present, to a user M₂ not wearing an HMD 3, a mixed-reality video in which a virtual object is drawn superimposed on a video of the real world and whose viewpoint is different from that of the user M₁. A viewpoint refers to a point from which an object is viewed, that is, from where the object is viewed. Further, the virtual object display system 100 includes a function of enabling the user M₂ not wearing the HMD 3 to manipulate a virtual object.

The virtual object display system 100 includes a virtual object manipulation device 1, an omnidirectional camera 2, an HMD 3, and a communication device 4. It is assumed that a real object (here, a desk O_{R}) is present in a real space. The virtual object manipulation device 1 and the HMD 3 are assumed to store therein information (position, size, direction, shape, or the like) of the virtual object.

The virtual object manipulation device 1 is configured to manipulate a virtual object in synchronization with the HMD 3.

The virtual object manipulation device 1 displays, on a monitor MO, a mixed-reality video in a specified line-of-sight direction from a video captured by the omnidirectional camera 2. Also, the virtual object manipulation device 1 manipulates a position, orientation, or the like of the virtual object in accordance with an instruction from the user M₂ and synchronizes the position, orientation, or the like of the virtual object with the HMD 3. A line of sight refers to a direction from a viewpoint to a subject being viewed.

The virtual object manipulation device 1 is connected to the omnidirectional camera 2, the monitor (a display) MO that displays a mixed-reality video, and an instruction device (a mouse MS, a keyboard KB, or the like) for a user M₂ to manipulate a virtual object.

Here, description will be given using an example in which there is one virtual object manipulation device 1. However, a plurality of virtual object manipulation devices 1 may be installed via a network with an omnidirectional camera 2 connected to each of the virtual object manipulation devices 1. The virtual object manipulation device 1 may be used as an online meeting terminal by using an online meeting application. An example in which a plurality of virtual object manipulation devices 1 are installed will be described later.

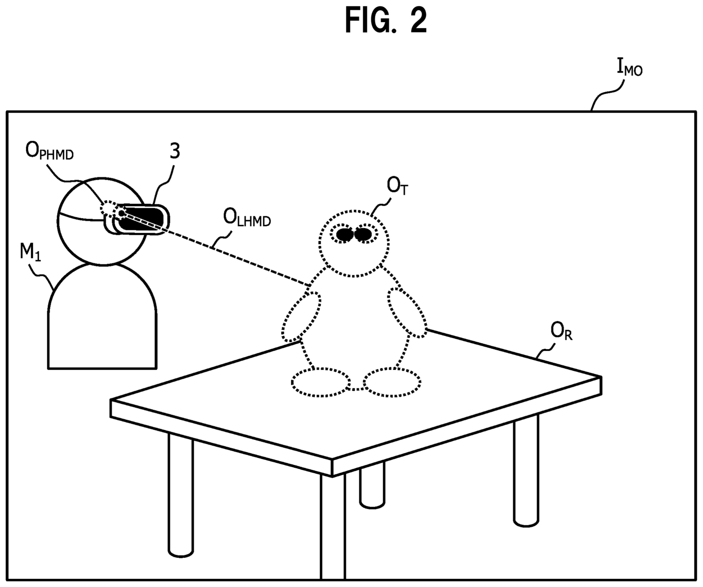

On a monitor MO connected to the virtual object manipulation device 1, a mixed-reality video I_{MO} in which a virtual object is drawn so as to be superimposed on an image of the real world is displayed as shown in Fig. 2.

As an example, in FIG. 2, objects other than the user M₁ wearing the HMD 3 and the desk O_{R} are virtual objects.

Here, as examples of virtual objects, the following are shown: a target virtual object O_{T} that is a three-dimensional structure generated by three-dimensional (3D) CAD or the like and is an observation/manipulation target; a viewpoint object O_{PHMD} that indicates a viewpoint position of the HMD 3; and a line-of-sight direction object O_{LHMD} that indicates a line-of-sight direction of the viewpoint object O_{PHMD}.

The omnidirectional camera 2 is configured to capture an omnidirectional video that forms a 360-degree view in vertical and horizontal directions.

The omnidirectional camera 2 outputs the captured omnidirectional video to the virtual object manipulation device 1.

The HMD 3 is configured to be worn on a head of the user M₁ and to display a mixed-reality video in which a virtual object is drawn so as to be superimposed on the real world in accordance with a position and orientation of the head of the user M₁. It is assumed that the HMD 3 that is used includes a hand tracking function that enables the user M₁ to move a virtual object in the mixed-reality video.

The HMD 3 may be an optical see-through type device that allows a user to view the real world through a semitransparent display. The HMD 3 may be a video see-through type device that captures a video of the real world and displays the video on a display.

Although a case is described here in which one user is wearing the HMD 3, there may be a plurality of users wearing the HMD 3.

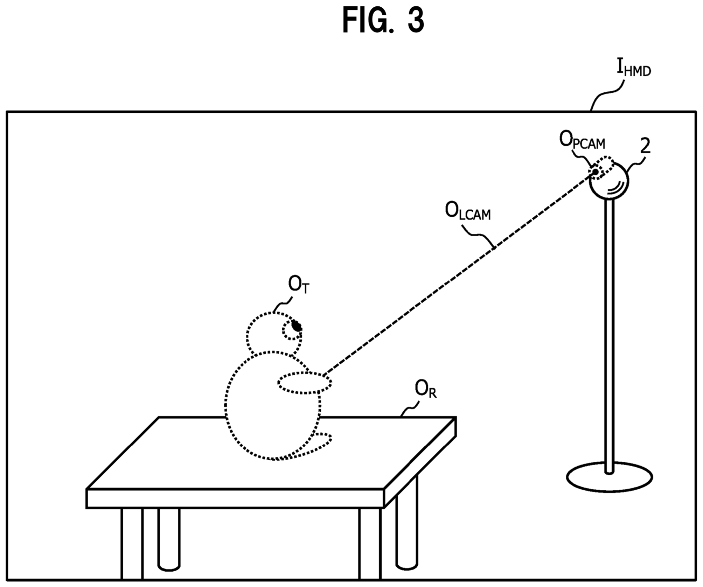

In the HMD 3, as shown in FIG. 3, a mixed-reality video I_{HMD} is displayed in which a virtual object is drawn and superimposed on the real world.

In FIG. 3, objects other than the omnidirectional camera 2 and the desk O_{R} are virtual objects.

Here, as examples of virtual objects, the following are shown: a virtual object O_{T} that is a target of manipulation; a viewpoint object O_{PCAM} that indicates a viewpoint position as instructed by the user M₂ of the virtual object manipulation device 1; and a line-of-sight object O_{LCAM} indicating a line-of-sight direction of the viewpoint object O_{PCAM}.

The communication device 4 is a communication device configured to transmit and receive control information between the virtual object manipulation device 1 and the HMD 3.

The communication device 4 may, for example, be a Wi-Fi router that transmits and receives data wirelessly between the virtual object manipulation device 1 and the HMD 3. In one or more embodiments, the virtual object manipulation device 1 and the communication device 4 may be connected by wire.

In a case where the virtual object manipulation device 1 and the HMD 3 are configured to directly communicate with each other, the communication device 4 does not have to be included.

Here, virtual objects that are processed by the virtual object display system 100 will be described. The virtual objects processed by the virtual object display system 100 include a target virtual object, a viewpoint object, a line-of-sight object, a new-viewpoint object, a viewpoint change execution object, and a spherical object.

The target virtual object is a three-dimensional structure generated by a 3D CAD or the like, and is a virtual object that is a target of observation and manipulation. An example of the target virtual object is the target virtual object O_{T} shown in FIGS. 2 and 3.

Viewpoint objects include a virtual object indicating a viewpoint position of the user M₁ wearing the HMD 3 and a virtual object indicating a viewpoint position of the user M₂ not wearing the HMD 3 (a position of the omnidirectional camera 2 [a fisheye lens]). An example of a viewpoint object is a viewpoint object O_{PHMD} that indicates a viewpoint position of the user M₁ wearing the HMD 3 shown in FIG. 2. An example of a viewpoint object is a viewpoint object O_{PCAM} that indicates a position of the omnidirectional camera 2 shown in FIG. 3.

The viewpoint object may be of any shape, but may be represented by a three-dimensional shape with a discernible orientation, such as a cylinder, as shown in FIGS. 2 and 3.

A line-of-sight object is a virtual object, such as a straight line, that is associated with a viewpoint object and indicates a line-of-sight direction. An example of a line-of-sight object is a line-of-sight object O_{LHMD} that indicates a line-of-sight direction of the user M₁ wearing the HMD 3 shown in FIG. 2. An example of a line-of-sight object is a line-of-sight object O_{LCAM} that indicates a line-of-sight direction from the omnidirectional camera 2 shown in FIG. 3.

In the examples of FIGS. 2 and 3, the line-of-sight objects O_{LHMD} and O_{LCAM} are indicated by broken lines. However, a line-of-sight object may be a solid line, a dotted line, a chain line, or any other type of line. The line-of-sight object may be shaped to include an arrowhead (→ or the like ) at a tip that indicates a destination of the line of sight in order to show a line-of-sight direction.

In the examples of FIGS. 2 and 3, the line-of-sight objects O_{LHMD} and O_{LCAM} are shaped in a form of a line that ends at the viewpoint object O_{PHMD} and the target virtual object O_{T} and in a form of a line that ends at the viewpoint object O_{PCAM} and the target virtual object O_{T}, respectively. However, as long as the line-of-sight direction may be known, a line-of-sight object may not be shaped in the form of a line whose ends are at a viewpoint object and a target virtual object. For example, one or both ends of the line of a line-of-sight object may be spaced apart from the viewpoint object or/and the target virtual object. Alternatively, a line-of-sight object may be shaped in a form of a fan that indicates a field of view, with a viewpoint of the line-of-sight object as a starting point end.

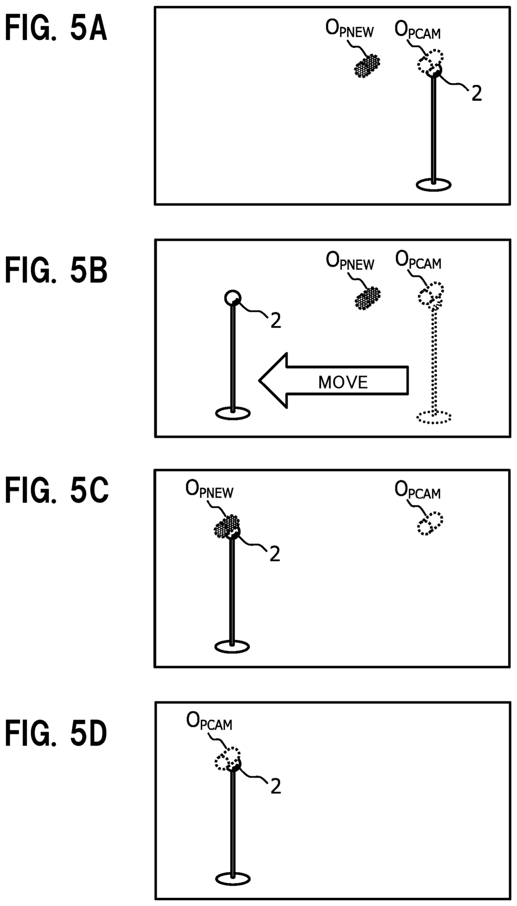

The new-viewpoint object is a virtual object that is used when a position of the omnidirectional camera 2 is moved and the user M₁ wearing the HMD 3 moves a viewpoint position to the new position of the omnidirectional camera 2 (a new-viewpoint object O_{PNEW} shown in FIG. 5A that will be described later). The new-viewpoint object is used to identify a position of the omnidirectional camera 2 in real space, and does not directly indicate a viewpoint position of the user M₂ not wearing the HMD 3 (a position of the viewpoint object O_{PCAM}). That is, at a stage where the position of the omnidirectional camera 2 has been moved and the new-viewpoint object is moved to the position of the omnidirectional camera 2, the position of the new-viewpoint object and the position of the viewpoint object are different from each other.

The new-viewpoint object is always in a displayed state, but a non-displayed state may be made standard and the new-viewpoint object may be displayed when the position of the omnidirectional camera 2 is changed.

The viewpoint change execution object is a virtual object in the form of a button or the like that is selected (by pressing a mouse button or the like) by the user M₂ not wearing the HMD 3 to change the viewpoint position when the position of the omnidirectional camera 2 has been moved. By selecting the viewpoint change execution object, the viewpoint object is moved to the position of the new-viewpoint object, and the position of the new-viewpoint object and the position of the viewpoint object become the same.

The viewpoint change execution object is always in a displayed state, but a non-displayed state may be made standard and the viewpoint change execution object may be displayed when the position of the omnidirectional camera 2 is to be changed.

The spherical object is a virtual, spherical screen on which an omnidirectional image of each frame of an omnidirectional video that is captured by the omnidirectional camera 2 is drawn. Although the spherical object is a virtual object here, there is no concept of movement for the spherical object, and the spherical object is not displayed on the HMD 3.

Specific processing details using these virtual objects will be described later.

With the above-described configuration, the virtual object display system 100 may present, via the monitor MO, a mixed-reality video to the user M₂ who is not wearing the HMD 3. Furthermore, with the virtual object display system 100, the user M₂ not wearing the HMD 3 may manipulate a virtual object.

Configurations and operation of the virtual object manipulation device 1 and the HMD 3 will be described below.

### [Configuration of Virtual Object Manipulation Device]

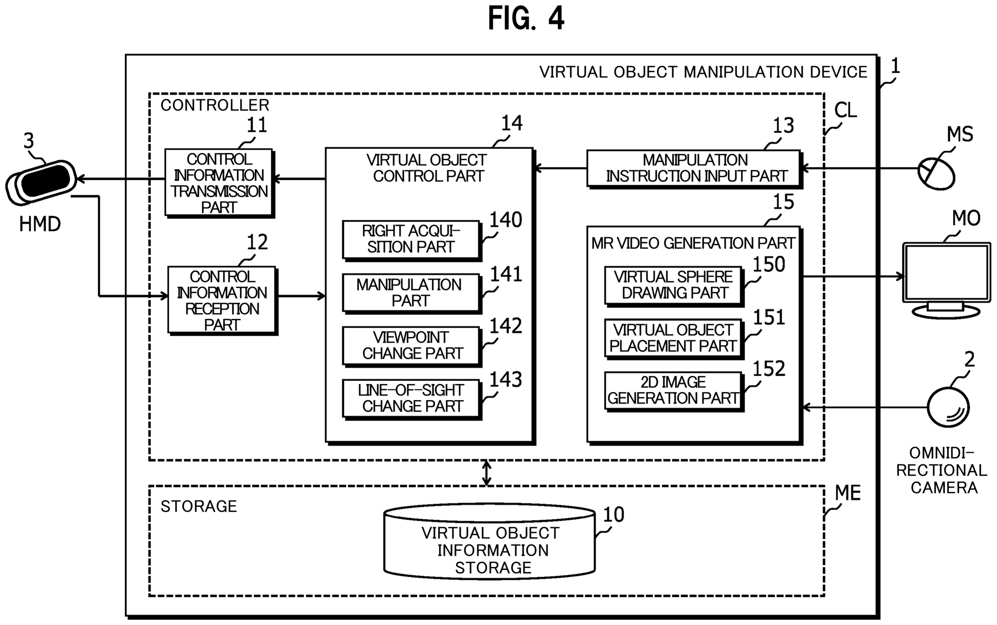

First, a configuration of the virtual object manipulation device 1 will be described with reference to FIG. 4 (see FIG. 1 as appropriate).

The virtual object manipulation device 1 includes a storage ME and a controller CL.

The storage ME is configured to store therein information on the virtual object used by the virtual object manipulation device 1. The storage ME may be configured with a general, non-transitory storage medium such as a semiconductor memory.

Here, the storage ME includes a virtual object information storage 10.

The virtual object information storage 10 stores therein structure information and position information of a virtual object. Here, the structure information includes information that specifies a structure of the virtual object. For example, the structure information is information of a three-dimensional structure created by a 3D CAD. In a case where the virtual object may move, the structure information also includes animation information indicating the movement. The position information is information that specifies a placed position of the virtual object, and includes position coordinates (three variables) in a three-dimensional space, an orientation (two variables), a scale (one variable), or the like.

Further, the virtual object information storage 10 stores therein the viewpoint position of the user M₁ wearing the HMD 3, the viewpoint position of the user M₂ not wearing the HMD 3 (the position of the omnidirectional camera 2), and the respective line-of-sight directions.

The various information stored in the virtual object information storage 10 is set in advance to initial values, but is updated by the virtual object control part 14 that will be described later.

The controller CL is configured to perform various control operations of the virtual object manipulation device 1.

The controller CL includes a control information transmission part 11, a control information reception part 12, a manipulation instruction input part 13, a virtual object control part 14, and a mixed-reality (MR) video generation part 15.

The control information transmission part 11 is configured to transmit position information of a virtual object that has been manipulated by the virtual object control part 14 to the HMD 3 as control information.

Here, the control information transmission part 11 transmits the control information to the HMD 3 by Wi-Fi via the communication device 4.

The control information reception part 12 is configured to receive position information of a virtual object that has been manipulated by the HMD 3 as control information from the HMD 3. The control information reception part 12 outputs the received control information to the virtual object control part 14.

Here, the control information reception part 12 receives the control information by Wi-Fi via the communication device 4.

The manipulation instruction input part 13 is configured to receive as input a manipulation instruction to manipulate a virtual object in the mixed-reality video that has been generated by the mixed-reality video generation part 15 and displayed on the monitor MO.

Here, the manipulation instruction input part 13 receives as input a manipulation instruction to manipulate a virtual object from an externally connected instruction device such as a mouse MS. The manipulation instruction includes, for example, information on pressing or releasing a button of the mouse MS, drag information, information on pressing or releasing a key of the keyboard KB, or the like.

The manipulation instruction input part 13 outputs the inputted manipulation instruction to the virtual object control part 14.

The virtual object control part 14 is configured to perform manipulation on a virtual object in response to receiving a manipulation instruction from the manipulation instruction input part 13 or receiving control information from the HMD 3.

Here, the virtual object control part 14 includes a right acquisition part 140, a manipulation part 141, a viewpoint change part 142, and a line-of-sight change part 143.

The right acquisition part 140 is configured to acquire or release a right to manipulate a target of manipulation (hereinafter, "manipulation right") in response to receiving a manipulation instruction to select or release a virtual object.

The right acquisition part 140 acquires the manipulation right of a virtual object that corresponds to a position where the mouse MS is located on the monitor MO when, for example, a left button of the mouse MS is pressed as a manipulation instruction to select the virtual object.

The virtual object corresponding to the position where the mouse MS is located may be detected to be a virtual object that exists at a position closest to the viewpoint position and on which the position of the mouse MS is projected within a predetermined field of view in the line-of-sight direction centered on the viewpoint position stored in the virtual object information storage 10.

The right acquisition part 140 notifies the HMD 3 of information that the manipulation right has been acquired (manipulation right acquisition information) as control information via the control information transmission part 11. Also, the right acquisition part 140 stores the information that the manipulation right has been acquired in the virtual object information storage 10.

The right acquisition part 140 releases the manipulation right when, for example, the left button of the mouse MS is released as a manipulation instruction to release the virtual object. The right acquisition part 140 transmits information that the manipulation right has been released (manipulation right release information) to the HMD 3 as control information via the control information transmission part 11. Also, the right acquisition part 140 stores the information that the manipulation right has been released in the virtual object information storage 10.

When the right acquisition part 140 is notified by the HMD 3 via the control information reception part 12 that the manipulation right of a virtual object has been acquired (manipulation right acquisition information) or released (manipulation right release information) as control information, the right acquisition part 140 stores information on a presence or absence of the manipulation right for that virtual object in the virtual object information storage 10.

When the right acquisition part 140 attempts to select a virtual object, if the manipulation right is already acquired, the right acquisition part 140 does not select the virtual object.

Although here in this embodiment, a manipulation right is held by a user from when the manipulation right is acquired by the user to when the manipulation right is released by the user, the manipulation right of the user may be released when another user acquires the manipulation right.

Virtual objects whose manipulation rights may be acquired by another user include the target virtual object and the new-viewpoint object.

With regards to the viewpoint object, the line-of-sight object, and the viewpoint change execution object, manipulation rights of users of the virtual object manipulation device 1 and the HMD 3 are set in advance in the virtual object manipulation device 1 and the HMD 3 respectively. The viewpoint object, the line-of-sight object, and the viewpoint change execution object are virtual objects whose manipulation rights may not be moved. A manipulation right is not set for the spherical object. This is because the spherical object is not a target of manipulation such as movement.

The manipulation part 141 is configured to perform manipulation that corresponds to a manipulation instruction on a virtual object in response to receiving the manipulation instruction from the manipulation instruction input part 13.

The manipulation part 141 moves a position of a virtual object when, as a manipulation instruction to move the virtual object, a drag action is performed with the mouse MS while the left button of the mouse MS is in a pressed state (a state where the manipulation right is set), for example. A movement of the virtual object in a three-dimensional space may be performed by a predetermined instruction, such as a movement in a horizontal direction or a vertical direction by a drag action with the left button of the mouse MS, a movement in a depth direction by using a trackball of the mouse MS, or rotation by using an arrow key of the keyboard KB.

The movement manipulation performed by the manipulation part 141 includes rotation, a scale change, or the like.

The manipulation part 141 calculates an amount of movement, an amount of rotation, a ratio of a scale, or the like of a virtual object in accordance with an amount of operation of the mouse MS or the like to obtain new position information of the virtual object.

The manipulation part 141 stores the position information of a virtual object after manipulation in the virtual object information storage 10, and also transmits specifying information of the virtual object (an identification number or the like) and the position information of the virtual object as control information to the HMD 3 via the control information transmission part 11.

Further, the manipulation part 141 is configured, in response to receiving position information of a virtual object after manipulation as control information from the control information reception part 12, to move the virtual object to the position after manipulation .

When the manipulation part 141 is notified of the position information of the virtual object after manipulation from the HMD 3 via the control information reception part 12, the manipulation part 141 stores that position information in the virtual object information storage 10.

The viewpoint change part 142 is configured to change a viewpoint position (a position of the viewpoint object O_{PCAM}) in response to receiving a manipulation instruction to change the viewpoint position.

The viewpoint change part 142 changes the position of the viewpoint object to a position of the new-viewpoint object when a button of the mouse MS is pressed over the viewpoint change execution object via the manipulation instruction input part 13 as a manipulation instruction to change the viewpoint position.

In association with the changed viewpoint object, the viewpoint change part 142 updates the line-of-sight object as a straight line that extends in a line-of-sight direction from the position of the viewpoint object.

Then, the viewpoint change part 142 stores the position information of the viewpoint object and the line-of-sight object in the virtual object information storage 10, and transmits the position information of the viewpoint object and the line-of-sight object as control information to the HMD 3 via the control information transmission part 11.

Only the user of the virtual object manipulation device 1 has the manipulation right of the viewpoint object corresponding to the virtual object manipulation device 1. Because of this, when a position of the omnidirectional camera 2 is changed, the user of the HMD 3 moves the new-viewpoint object that may be moved by the user of the HMD 3 to the position of the omnidirectional camera 2.

A viewpoint change process will be described here with reference to FIGS. 5A to 5D (see FIGS. 1 and 4 as appropriate).

The diagrams 5A to 5D show a mixed-reality video displayed on the HMD 3. To keep the description simple, the position of the HMD 3 remains fixed.

In FIG. 5A, the viewpoint object O_{PCAM} is present at a position of the omnidirectional camera 2, and the new-viewpoint object O_{PNEW} is present as another virtual object. Note that the new-viewpoint object O_{PNEW} may be placed at any position.

As illustrated in FIG. 5B, the user M₁ wearing the HMD 3 physically moves the position of the omnidirectional camera 2 according to own will of the user M₁ or according to a request (a direct call, phone call, video conference audio, or the like) of the user M₂ not wearing the HMD 3.

Then, as shown in FIG. 5C, the user M₁ wearing the HMD 3 holds the new-viewpoint object O_{PNEW} in the three-dimensional space, moves the new-viewpoint object O_{PNEW} to a new viewpoint position of the omnidirectional camera 2, and releases the new-viewpoint object OPNEW.

Thereafter, when the user M₂ not wearing the HMD 3 selects (presses a mouse button or the like) the viewpoint change execution object that may be placed at any position, the viewpoint change part 142 changes, as shown in 5D, the position of the viewpoint object O_{PCAM} to the position of the new-viewpoint object O_{PNEW} (FIG. 5C), and stores the position information in the virtual object information storage 10. Note that, after changing the position of the viewpoint object, the viewpoint change part 142 may place the viewpoint change execution object so that viewpoint change execution object exists close to the viewpoint object within the two-dimensional screen. This may save the user M₂ the trouble of searching for the viewpoint change execution object.

The viewpoint change part 142 also updates the position of the line-of-sight object in association with the updated viewpoint object.

Returning to FIG. 4, the configuration of the virtual object manipulation device 1 will be described further.

The line-of-sight change part 143 is configured, in response to receiving a manipulation instruction to change the line-of-sight direction (rotate the viewpoint object) from the manipulation instruction input part 13, to change the line-of-sight direction.

The line-of-sight change part 143 rotates the viewpoint object when, as a manipulation instruction to rotate the viewpoint object, a drag action is performed with the mouse MS while a right button of the mouse MS is in a pressed state, for example. A rotation of the viewpoint object in a three-dimensional space may be performed by a predetermined instruction, such as performing a drag action with the right button of the mouse MS for rotation in a horizontal direction, or using a trackball while pressing the right button of the mouse MS for rotation in a vertical direction.

At this time, the line-of-sight change part 143 updates the line-of-sight object in association with the rotated viewpoint object.

The line-of-sight change part 143 stores the position information of the viewpoint object and the line-of-sight object after the rotation in the virtual object information storage 10, and transmits the position information of the viewpoint object and the line-of-sight object after the rotation as control information to the HMD 3 via the control information transmission part 11.

The mixed-reality video generation part 15 is configured to generate a mixed-reality video in which a virtual object and a video in a specified line-of-sight direction from the omnidirectional video input from the omnidirectional camera 2 are superimposed.

The mixed-reality video generation part 15 generates an image of each frame to be displayed on the monitor MO as a mixed-reality video from a video captured by the omnidirectional camera 2 and the structure information and position information of a virtual object stored in the virtual object information storage 10.

Here, the mixed-reality video generation part 15 includes a virtual sphere drawing part 150, a virtual object placement part 151, and a two-dimensional (2D) image generation part 152.

The virtual sphere drawing part 150 is configured to draw omnidirectional images of an omnidirectional video on a frame-by-frame basis onto a spherical object that is a virtual object .

Here, the virtual sphere drawing part 150 maps an omnidirectional image that is input from the omnidirectional camera 2 on a surface of the spherical object.

The virtual sphere drawing part 150 outputs the spherical object on which the omnidirectional image is drawn to the virtual object placement part 151.

The virtual object placement part 151 is configured to place a virtual object inside the spherical object on which the omnidirectional image has been drawn by the virtual sphere drawing part 150.

The virtual object placement part 151 places virtual objects (a target virtual object, a viewpoint object, a line-of-sight object, a new-viewpoint object, and a viewpoint change execution object) inside the spherical object based on the structure information and position information of the virtual objects stored in the virtual object information storage 10.

The virtual object placement part 151 outputs the spherical object on which the omnidirectional image has been drawn together with information on the virtual objects that have been placed inside the spherical object to the two-dimensional image generation part 152.

The two-dimensional image generation part 152 is configured to generate a two-dimensional image in the line-of-sight direction from the spherical object and the information on the virtual objects generated by the virtual object placement part 151.

The two-dimensional image generation part 152 places a virtual camera having a two-dimensional imaging plane that is perpendicular to a vector of the line-of-sight direction stored in the virtual object information storage 10, with the center of the spherical object being set as a viewpoint position. Then, the two-dimensional image generation part 152 generates a two-dimensional image in the line-of-sight direction by projecting, onto the two-dimensional imaging plane, pixels of the omnidirectional image and the virtual objects that are captured from the viewpoint position via the two-dimensional imaging plane.

The two-dimensional image generation part 152 outputs the generated two-dimensional image to the monitor MO.

The mixed-reality video generation part 15 sequentially outputs two-dimensional images at a predetermined frame rate.

This allows the user not wearing the HMD 3 to view the mixed-reality video through the monitor MO.

With the configuration described above, the virtual object manipulation device 1 may present to the user M₂ not wearing the HMD 3 a mixed-reality video that is from a different viewpoint from that of the user M₁ wearing the HMD 3. The virtual object manipulation device 1 allows even the user M₂ not wearing the HMD 3 to manipulate a virtual object.

The virtual object manipulation device 1 may be operated by a program (a virtual object control program) for causing a computer to function as each part of the controller CL described above.

For example, the virtual object manipulation device 1 may be realized by running the virtual object control program on a personal computer (PC).

### [Configuration of HMD]

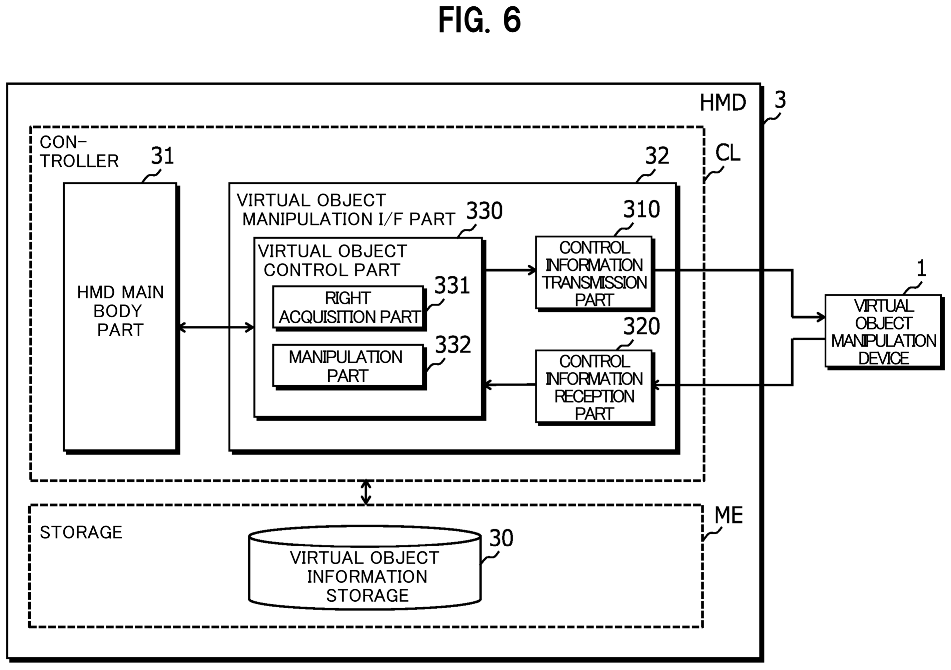

Next, a configuration of the HMD 3 will be described with reference to FIG. 6 (see FIG. 1 as appropriate).

The HMD 3 includes a storage ME and a controller CL.

The storage ME is configured to store therein information on virtual objects used in the HMD 3. The storage ME may be configured with a general, non-transitory storage medium such as a semiconductor memory.

Here, the storage ME includes a virtual object information storage 30. Description on information used in a general HMD, such as information for detecting a motion of a finger or hand, is omitted here.

The virtual object information storage 30 stores therein the structure information and the position information of virtual objects. Information stored in the virtual object information storage 30 is the same as the information stored in the virtual object information storage 10 described with reference to FIG. 4, and thus, description thereof will be omitted.

The controller CL is configured to perform various control operations of the HMD 3.

The controller CL includes an HMD main body part 31 and a virtual object manipulation interface (I/F) part 32.

The HMD main body part 31 is configured to display a virtual object that is superimposed on a real space on a display device (not shown) so as to present a mixed-reality video to a user wearing the HMD 3.

A conventional HMD having a hand tracking function may be used as the HMD main body part 31. Here, when the HMD main body part 31 detects a type of action, such as holding, releasing, or moving a virtual object, made by the user wearing the HMD 3 through the hand tracking function, the HMD main body part 31 outputs content of the detected action to the virtual object manipulation I/F part 32 as a manipulation instruction.

The HMD main body part 31 displays a virtual object at a corresponding position on the display device based on position information of virtual object information stored in the virtual object information storage 30.

Hereinafter, details of the HMD main body part 31 that are not directly related to the present invention will be omitted from the description.

The virtual object manipulation I/F part 32 is configured to coordinate manipulation of a virtual object by the virtual object manipulation device 1 and manipulation of the virtual object by the HMD main body part 31.

The virtual object manipulation I/F part 32 includes a control information transmission part 310, a control information reception part 320, and a virtual object control part 330.

The control information transmission part 310 is configured to receive, from the virtual object control part 330, position information of a virtual object that has been manipulated by the HMD main body part 31, and transmit the position information to the virtual object manipulation device 1 as control information.

Here, the control information transmission part 310 transmits the control information to the virtual object manipulation device 1 by Wi-Fi via the communication device 4.

The control information reception part 320 is configured to receive, as control information, position information of a virtual object that has been manipulated by the virtual object manipulation device 1. The control information reception part 320 outputs the received control information to the virtual object control part 330.

Here, the control information reception part 320 receives the control information by Wi-Fi via the communication device 4.

The virtual object control part 330 is configured to control manipulation of a virtual object according to the manipulation instruction input from the HMD main body part 31 or the control information input from the virtual object manipulation device 1.

Here, the virtual object control part 330 includes a right acquisition part 331 and a manipulation part 332.

The right acquisition part 331 is configured to acquire or release a right to manipulate a manipulation target (a manipulation right) by receiving a manipulation instruction to select or release a virtual object.

The right acquisition part 331 acquires the manipulation right of a virtual object in response to receiving, as a manipulation instruction to select the virtual object, an input from the HMD main body part 31 indicating that the virtual object is held.

The right acquisition part 331 notifies the virtual object manipulation device 1 of information that the manipulation right has been acquired (manipulation right acquisition information) as control information via the control information transmission part 310. Also, the right acquisition part 331 stores the information that the manipulation right has been acquired in the virtual object information storage 30.

Further, the right acquisition part 331 releases the manipulation right of a virtual object in response to receiving, as a manipulation instruction to release the virtual object, an input from the HMD main body part 31 indicating that the virtual object is released.

The right acquisition part 331 notifies the virtual object manipulation device 1 of information that the manipulation right has been released (manipulation right release information) as control information via the control information transmission part 310. Also, the right acquisition part 331 stores the information that the manipulation right has been released in the virtual object information storage 30.

Although here in this embodiment, a manipulation right is held by a user from when the manipulation right is acquired by the user to when the manipulation right is released by the user, the manipulation right of the user may be released when another user acquires the manipulation right.

Virtual objects that are targets of acquisition and release of a manipulation right by the right acquisition part 331 include the target virtual object and the new-viewpoint object.

The manipulation part 332 is configured to perform manipulation on a virtual object in response to receiving a manipulation instruction from the HMD main body part 31 or receiving control information from the virtual object manipulation device 1.

When the manipulation part 332 receives a manipulation instruction on moving (including rotation, scale change, or the like) a virtual object from the HMD main body part 31, the manipulation part 332 transmits new position information that is stored in the virtual object information storage 30 as control information to the virtual object manipulation device 1 via the control information transmission part 310.

Further, when the manipulation part 332 receives position information of a virtual object after movement as control information from the control information reception part 320, the manipulation part 332 moves the virtual object.

When the manipulation part 332 is notified of the position information of the virtual object after movement from the virtual object manipulation device 1 via the control information reception part 320, the manipulation part 332 stores the position information in the virtual object information storage 30. Thereafter, the virtual object will be displayed at a new position by the HMD main body part 31.

With the above-described configuration, the virtual object manipulation I/F part 32 of the HMD 3 may enable even the user M₂ not wearing the HMD 3 to manipulate a virtual object via the virtual object manipulation device 1.

The virtual object manipulation I/F part 32 of the HMD 3 may be operated by a program (a virtual object manipulation I/F program) for causing a computer in the HMD 3 to function as the above-described parts. In one or more embodiments, the computer may be configured as a separate body from the HMD 3 and connected to the HMD 3 by wire or the like.

### [Operation of Virtual Object Display System]

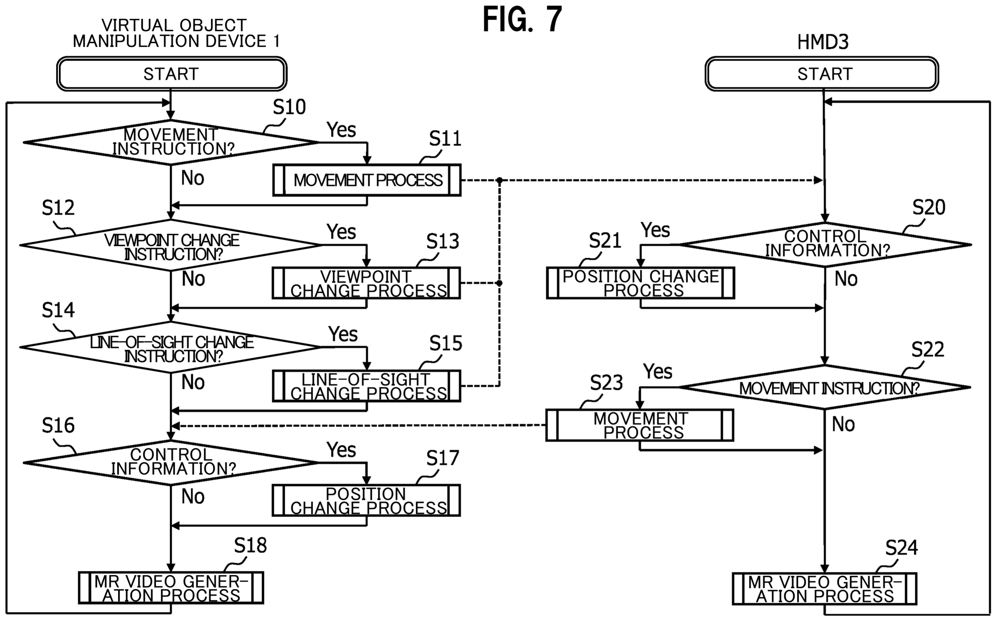

Next, operation of the virtual object display system 100 according to the first embodiment of the present invention will be described with reference to FIG. 7 (see FIGS. 1, 4, and 6 as appropriate).

This operation is carried out using manipulation instructions from the respective users of the virtual object manipulation device 1 and the HMD 3 and control information from another device as events. The order of occurrence of the events is thus not limited to what is shown in FIG. 7.

Note that, when manipulating a virtual object that requires a manipulation right, it is necessary to acquire in advance the manipulation right of the virtual object to be manipulated although illustration thereof as a step is omitted. More specifically, the virtual object manipulation device 1 acquires the manipulation right with the right acquisition part 140 when a manipulation instruction to select the virtual object is received, and the HMD 3 acquires the manipulation right with the right acquisition part 331 when a manipulation instruction to hold the virtual object is received. In the following description, it is assumed that a manipulation right has been acquired for a virtual object as needed.

The virtual object manipulation device 1 repeatedly executes a process from step S10 to step S18 until instructed to end the process.

The HMD 3 repeatedly executes a process from step S20 to step S24 until instructed to end the process.

First, an operation of the virtual object manipulation device 1 will be described.

In step S10, the virtual object control part 14 determines whether a manipulation instruction input to the manipulation instruction input part 13 is an instruction to move a virtual object.

Here, when the manipulation instruction is an instruction to move (including rotation, scale change, or the like) a virtual object (Yes in step S10), the virtual object manipulation device 1 proceeds to step S11. On the other hand, when the manipulation instruction is not an instruction to move a virtual object (No in step S10), the virtual object manipulation device 1 proceeds to step S12.

In step S11, the manipulation part 141 performs a movement process to move the virtual object (calculates new position information), and transmits the position information of the virtual object after the movement as control information to the HMD 3 via the control information transmission part 11. Then, the virtual object manipulation device 1 proceeds to step S12.

In Step S12, the virtual object control part 14 determines whether a manipulation instruction input to the manipulation instruction input part 13 is an instruction to change the position of a viewpoint object that is a virtual object.

Here, when the manipulation instruction is an instruction to change the position of the viewpoint object (Yes in step S12), the virtual object manipulation device 1 proceeds to step S13. On the other hand, when the manipulation instruction is not an instruction to change the position of the viewpoint object (No in step S12), the virtual object manipulation device 1 proceeds to step S14.

In step S13, the viewpoint change part 142 changes the position of the viewpoint object to a position of the new-viewpoint object (updates the position information), and transmits the position information of the viewpoint object after the change as control information to the HMD 3 via the control information transmission part 11. Then, the virtual object manipulation device 1 proceeds to step S14.

The process of step S13 is a process that is performed after the position of the new-viewpoint object is moved in step S23 to a new position of the omnidirectional camera 2 that has been moved (step S23 which will be described later).

In step S14, the virtual object control part 14 determines whether a manipulation instruction input to the manipulation instruction input part 13 is an instruction to change a line-of-sight direction (rotate the viewpoint object).

Here, when the manipulation instruction is an instruction to change the line-of-sight direction (Yes in step S14), the virtual object manipulation device 1 proceeds to step S15. On the other hand, when the manipulation instruction is not an instruction to change the line-of-sight direction (No in step S14), the virtual object manipulation device 1 proceeds to step S16.

In step S15, the line-of-sight change part 143 changes the line-of-sight direction of the viewpoint object to a rotated position in a specified direction (updates the position information), and transmits the position information (including the direction) of the viewpoint object after the change as control information to the HMD 3 via the control information transmission part 11. Then, the virtual object manipulation device 1 proceeds to step S16.

In Step S16, the virtual object control part 14 determines whether position information has been received as control information from the HMD 3 via the control information reception part 12.

Here, when the control information (position information) has been received, the manipulation part 141 changes the position of a virtual object to a position indicated by the position information in step S17. Then, the virtual object manipulation device 1 proceeds to step S18. On the other hand, when the control information (position information) has not been received (No in step S16), the virtual object manipulation device 1 proceeds to step S18.

In step S18, the mixed-reality video generation part 15 combines a video from the omnidirectional camera 2 and virtual objects based on position information, and displays an image corresponding to the line-of-sight direction on the monitor MO as a mixed-reality video.

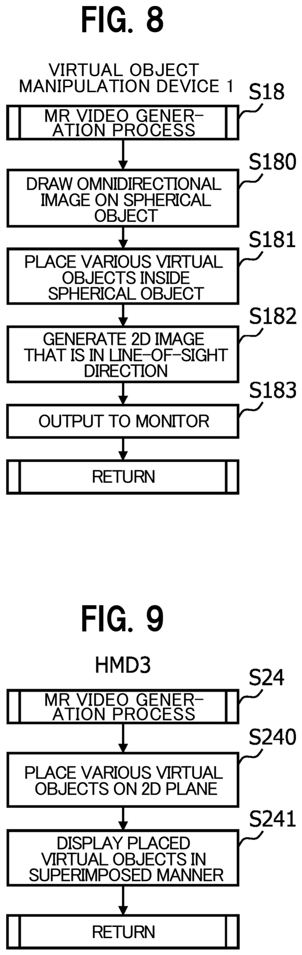

This step S18 will now be described in more detail with reference to FIG. 8.

In step S180, the virtual sphere drawing part 150 draws an omnidirectional image of each frame of the omnidirectional video that is input from the omnidirectional camera 2 on the spherical object (spherical OBJ).

In step S181, the virtual object placement part 151 places a virtual object (virtual OBJ) inside the spherical object on which the omnidirectional image has been drawn.

In step S182, the two-dimensional image generation part 152 sets the center of the spherical object as a viewpoint position, and projects pixels of the omnidirectional image and the virtual object from the viewpoint position onto a virtual, two-dimensional imaging plane, thereby generating a two-dimensional (2D) image in the line-of-sight direction.

In step S183, the two-dimensional image generation part 152 outputs the generated two-dimensional image to the monitor MO.

As a result, a mixed-reality video in which the virtual object is placed in real space is displayed on the monitor MO connected to the virtual object manipulation device 1. Further, the user of the virtual object manipulation device 1 may operate the virtual object even without wearing the HMD 3.

Going back to referring to FIG. 7, an operation of the HMD 3 will be described.

In step 20, the virtual object control part 330 determines whether position information has been received as control information from the virtual object manipulation device 1 via the control information reception part 320.

Here, when the control information (position information) has been received (Yes in step S20), the manipulation part 332 changes the position of a virtual object to a position indicated by the position information in step S21. The HMD 3 then proceeds to step S22. When, on the other hand, the control information (position information) has not been received (No in step S20), the HMD 3 proceeds to step S22.

In Step S22, the virtual object control part 330 determines whether a manipulation instruction on moving (including rotation, scale change, or the like) a virtual object has been input from the HMD main body part 31 as a manipulation instruction.

Here, when the manipulation instruction on moving a virtual object has been input (Yes in step S22), the manipulation part 332 transmits new position information in step S23 as control information to the virtual object manipulation device 1 via the control information transmission part 310. The HMD 3 then proceeds to step S24. When, on the other hand, the manipulation instruction has not been input (No in step S22), the HMD 3 proceeds to step S24.

In step S24, the HMD main body part 31 displays, on the display device, a mixed-reality video obtained by combining a video of real space with virtual objects.

This step S24 will now be described in more detail with reference to FIG. 9.

In step S240, the HMD main body part 31 places the virtual objects (virtual OBJs) on a two-dimensional (2D) plane corresponding to a field of view based on position information of virtual object information stored in the virtual object information storage 30.

In step S241, the virtual objects that have been placed on the two-dimensional plane in step S240 are superimposed on real space and displayed on the display device by the HMD main body part 31.

In this way, a virtual object manipulated by the user of the HMD 3 may be displayed synchronously on the monitor MO of the virtual object manipulation device 1. Further, a virtual object manipulated by the user of the virtual object manipulation device 1 may be displayed synchronously on the HMD 3.

Next, operations shown in FIG. 7 will be described individually.

### (Movement of Virtual Object by User of Virtual Object Manipulation Device)

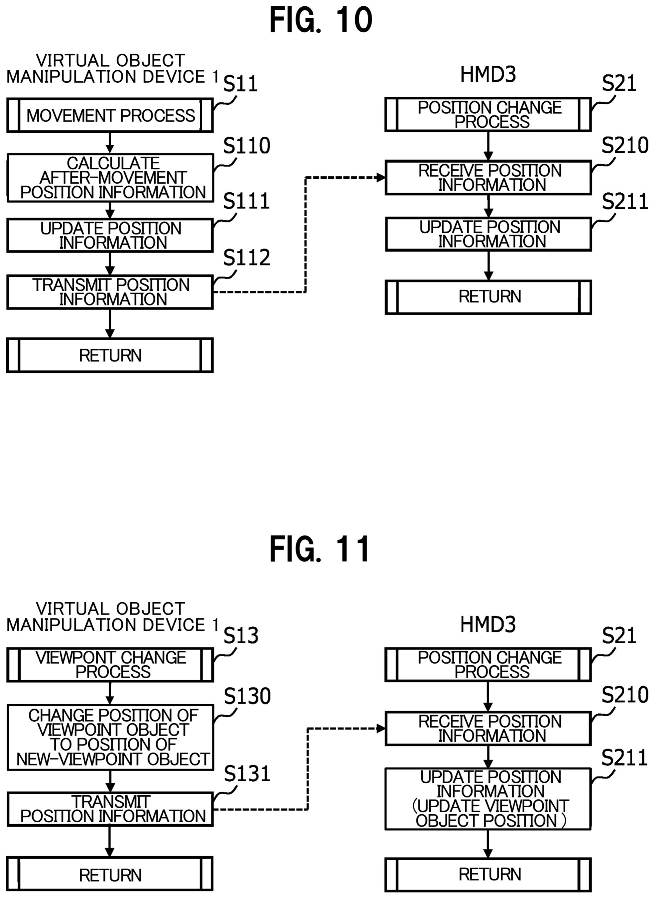

First, with reference to FIG. 10, a process (steps S11 and S21) that is carried out when the user of the virtual object manipulation device 1 performs an operation of moving (including rotation, a scale change, or the like) a virtual object will be described.

When the user of the virtual object manipulation device 1 performs an operation (mouse operation) of moving the virtual object, the virtual object manipulation device 1 performs an operation (movement process) of step S11, and the HMD 3 performs an operation (position change process) of step S21.

In step S110, the manipulation part 141 of the virtual object manipulation device 1 calculates position information of a new position of the virtual object after the movement in accordance with a manipulation instruction.

In step S111, the manipulation part 141 stores the position information of the virtual object in the virtual object information storage 10 to update the position information.

In step S112, the manipulation part 141 transmits the position information of a new position after the movement to the HMD 3 as control information via the control information transmission part 11.

In step S210, the control information reception part 320 of the HMD 3 receives the control information (position information).

In step S211, the manipulation part 332 stores the position information received in step S210 in the virtual object information storage 30 as new position information of the virtual object to update the position information of the virtual object.

Thereafter, the virtual object that has moved to the new position will be displayed by steps S18 and S24 being performed (FIG. 7).

### (Change of Viewpoint Position)

Next, with reference to FIG. 11, a process (steps S13 and S21) that is carried out when the user of the virtual object manipulation device 1 instructs a change in the viewpoint position will be described.

When the user of the virtual object manipulation device 1 gives an instruction to change the viewpoint position, the virtual object manipulation device 1 performs an operation of step S13, and the HMD 3 performs an operation of step S21.

In step S130, the viewpoint change part 142 of the virtual object manipulation device 1 updates the position information of the viewpoint object (viewpoint OBJ) to the position information of the new-viewpoint object (new-viewpoint OBJ) stored in the virtual object information storage 10, and stores the updated position information of the viewpoint object in the virtual object information storage 10.

Also, in association with the viewpoint object after the change, the viewpoint change part 142 updates the line-of-sight object as a straight line extending in the line-of-sight direction from a position of the viewpoint object.

In step S131, the viewpoint change part 142 transmits the new position information of the viewpoint object after the movement (including the position information of the line-of-sight object) as control information to the HMD 3 via the control information transmission part 11.

In step S210, the control information reception part 320 of the HMD 3 receives the control information (position information).

In step S211, the manipulation part 332 stores the position information received in step S210 in the virtual object information storage 30 as new position information of the virtual objects (viewpoint object, line-of-sight object) to update the position information of the virtual objects.

Thereafter, the virtual objects (the viewpoint object, the line-of-sight object) that have moved to the new positions will be displayed by steps S18 and S24 being performed (FIG. 7).

### (Change of Line-of-Sight Direction)

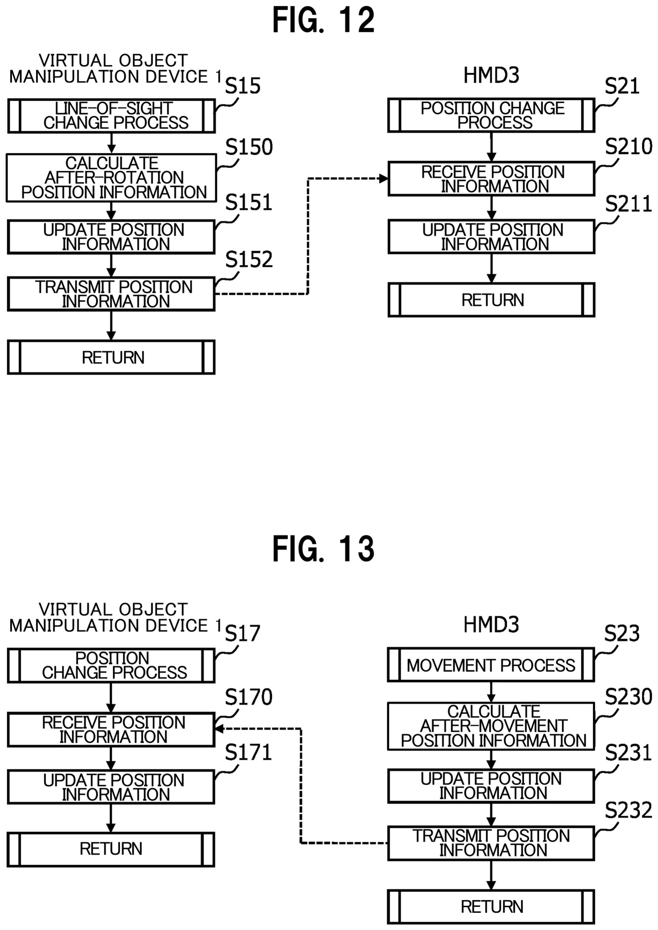

Next, with reference to FIG. 12, a process (steps S15 and S21) that is carried out when the user of the virtual object manipulation device 1 instructs a change in the line-of-sight direction will be described.

When the user of the virtual object manipulation device 1 instructs rotation of the line-of-sight direction, the virtual object manipulation device 1 performs an operation of step S15, and the HMD 3 performs an operation of step S21.

In step S150, position information of the viewpoint object after the viewpoint object is rotated in a specified direction is calculated by the line-of-sight change part 143 of the virtual object manipulation device 1.

In step S151, the line-of-sight change part 143 stores the position information of the virtual object after the rotation in the virtual object information storage 10 to update the position information.

Also, in association with the viewpoint object after the rotation, the line-of-sight change part 143 updates position information of the line-of-sight object as a straight line extending in the line-of-sight direction from a position of the viewpoint object.

In step S152, the line-of-sight change part 143 transmits the new position information after the rotation to the HMD 3 as control information via the control information transmission part 11.

In step S210, the control information reception part 320 of the HMD 3 receives the control information (position information).

In step S211, the manipulation part 332 stores the position information received in step S210 in the virtual object information storage 30 as new position information of the virtual objects (viewpoint object, line-of-sight object) to update the position information of the virtual objects.

Thereafter, the viewpoint object (line-of-sight object) that have been rotated will be displayed by steps S18 and S24 being performed (FIG. 7).

### (Movement of Virtual Object by User of HMD)

Next, with reference to FIG. 13, a process (steps S17 and S23) that is carried out when the user of the HMD 3 performs an operation of moving (including rotation, a scale change, or the like) a virtual object will be described.

When the user of the HMD 3 performs an operation of moving the virtual object, the HMD 3 performs an operation of step S23 (movement process), and the virtual object manipulation device 1 performs an operation of step S17 (position change process).

In Step S230, the HMD main body part 31 of the HMD 3 calculates position information of a new position of the virtual object after the movement in accordance with a manipulation instruction.

In step S231, the HMD main body part 31 stores the position information of the virtual object in the virtual object information storage 30 to update the position information.

In step S232, the manipulation part 332 transmits the position information of a new position after the movement as control information to the virtual object manipulation device 1 via the control information transmission part 310.

In Step S170, the control information reception part 12 of the virtual object manipulation device 1 receives the control information (position information).

In step S171, the manipulation part 141 stores the position information received in step S170 in the virtual object information storage 10 as new position information of the virtual object to update the position information of the virtual object.

Thereafter, the virtual object that has moved to the new position will be displayed by steps S18 and S24 being performed (FIG. 7).

Although the configuration and operation of the virtual object display system 100 have been described above, the present invention is not limited to this embodiment.

Here, the manipulation target has been a virtual object, but a control screen of an external control device may be a virtual object, and an inner part of the virtual object (the control screen) may be a manipulation target.

### <Second Embodiment>

### [Overall Configuration of Virtual Object Display System]

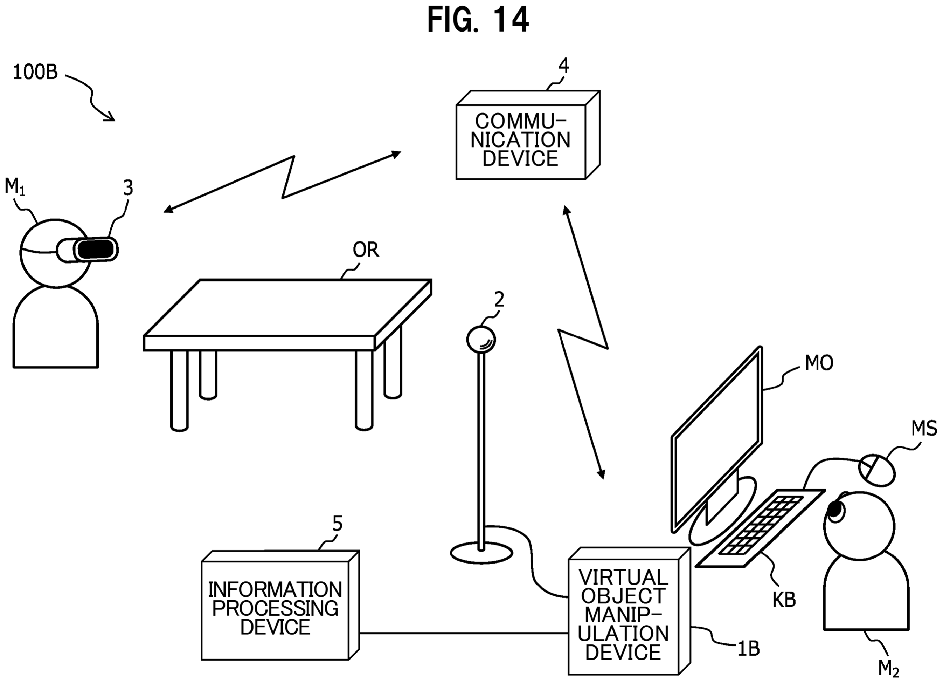

Hereinafter, an overall configuration of a virtual object display system 100B according to a second embodiment of the present invention will be described with reference to FIG. 14. With the virtual object display system 100B, a control screen of an external control device may be a target of manipulation.

As shown in FIG. 14, the virtual object display system 100B includes a virtual object manipulation device 1B in place of the virtual object manipulation device 1 of the virtual object display system 100 (FIG. 1), and an information processing device 5 is connected to the virtual object manipulation device 1B as an external device.

Configuration other than the virtual object manipulation device 1B and the information processing device 5 is the same as that of the virtual object display system 100 described with reference to FIG. 1, and thus description thereof will be omitted.

The virtual object manipulation device 1B is configured to display, on the monitor MO, a mixed-reality video of a specified a viewpoint from a video captured by the omnidirectional camera 2, and operate a position, orientation, or the like of a virtual object in accordance with an instruction from the user M₂. Further, the virtual object manipulation device 1B is configured to draw a control screen displayed by the information processing device 5 on a virtual object (panel object), and control the control screen.

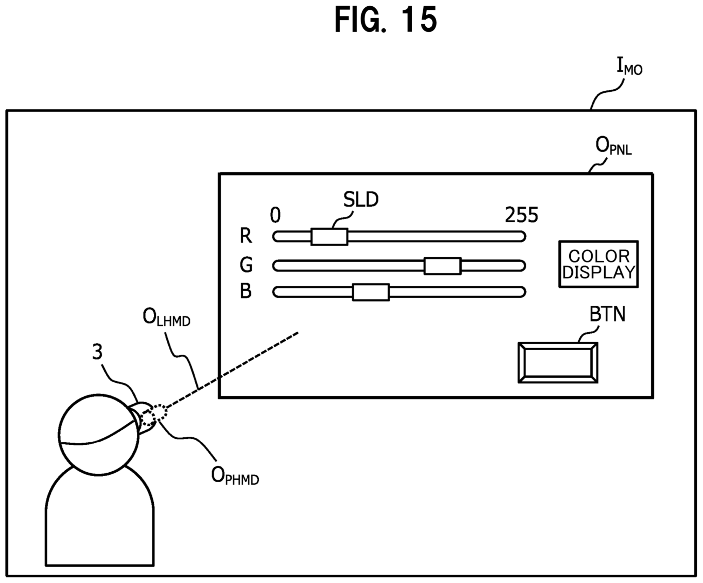

For example, as shown in FIG. 15, the virtual object manipulation device 1B displays, on the monitor MO, a mixed-reality video I_{MO} in which a real-world image that captures real space and a panel object O_{PNL} that is a virtual object are superimposed on each other. The panel object O_{PNL} shows an example of a control screen (RGB color adjustment) displayed by the information processing device 5.

The virtual object manipulation device 1B enables, for example, a manipulation such as moving a position of a slider SLD or pressing a button BTN in the panel object O_{PNL} of FIG. 15.

The information processing device (external device) 5 may be of any type as long as it may display a control screen.

### [Configuration of Virtual Object Manipulation Device]

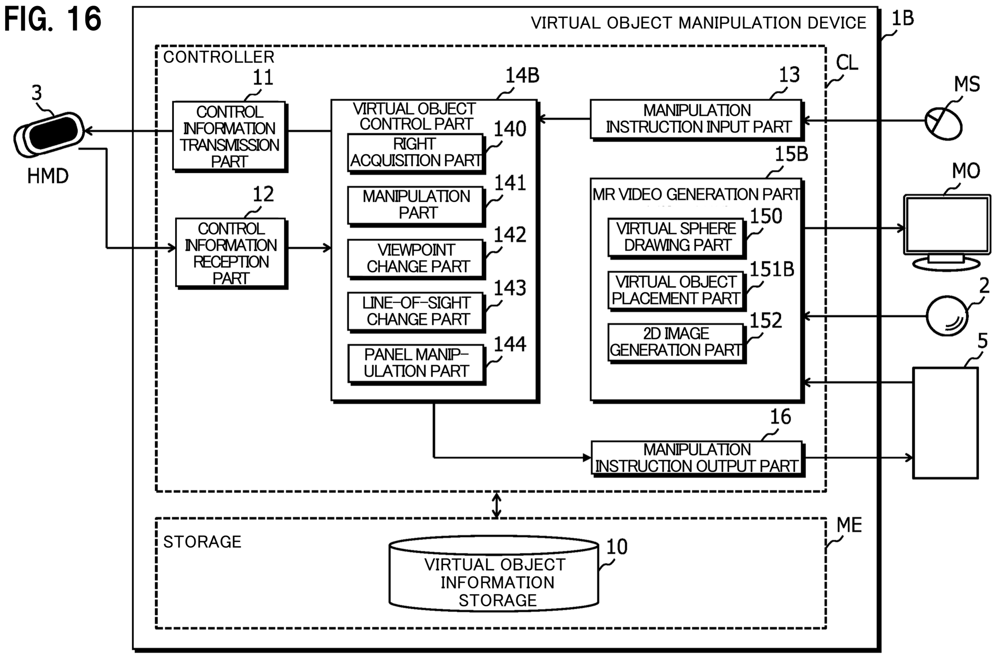

A configuration of the virtual object manipulation device 1B will be described with reference to FIG. 16 (and FIG. 14 as needed).

The virtual object manipulation device 1B includes a storage ME and a controller CL.

The storage ME is configured to store information on virtual objects used in the virtual object manipulation device 1B. The storage ME may be configured with a general, non-transitory storage medium such as a semiconductor memory.

Here, the storage ME includes a virtual object information storage 10. Contents stored in the virtual object information storage 10 are basically the same as those stored in the virtual object manipulation device 1 (FIG. 1). In this embodiment, however, a panel object is a virtual object, and the virtual object information storage 10 stores structure information and position information of the panel object.

The panel object is a sheet-shaped virtual object that displays a control screen. Like the target virtual object, the panel object is a virtual object that is manipulated by setting a manipulation right and is a virtual object whose manipulation right may be moved to another user,.

The controller CL is configured to perform various control operations of the virtual object manipulation device 1B.

The controller CL includes a control information transmission part 11, a control information reception part 12, a manipulation instruction input part 13, a virtual object control part 14B, a mixed-reality video generation part 15B, and a manipulation information output part 16. Configuration other than the virtual object control part 14B, the mixed-reality video generation part 15B, and the manipulation information output part 16 is the same as that of the virtual object manipulation device 1 (FIG. 1), and thus description thereof will be omitted.

The virtual object control part 14B is configured to perform manipulation on a virtual object in response to receiving a manipulation instruction from the manipulation instruction input part 13 or receiving control information from the HMD 3.

Here, the virtual object control part 14B includes a right acquisition part 140, a manipulation part 141, a viewpoint change part 142, a line-of-sight change part 143, and a panel manipulation part 144. Configuration other than the panel manipulation part 144 is the same as that of the virtual object manipulation device 1 (FIG. 1), and thus description thereof will be omitted.

The panel manipulation part 144 is configured to receive a manipulation instruction to manipulate an inner part of the panel object, which is a virtual object, and transmit the manipulation instruction to the information processing device 5 as manipulation information.

When, as a manipulation instruction to manipulate an inner part of the panel object, a button of the mouse MS is pressed on the inner part of the panel object, the panel manipulation part 144 outputs this manipulation instruction, together with a relative position within the panel object, to the manipulation information output part 16 as manipulation information.

The mixed-reality video generation part 15B is configured to generate a mixed-reality video in which a real-world image that captures real space and a virtual object are superimposed.

Here, the mixed-reality video generation part 15B includes a virtual sphere drawing part 150, a virtual object placement part 151B, and a two-dimensional image generation part 152. Configuration other than the virtual object placement part 151B is the same as that of the virtual object manipulation device 1 (FIG. 1), and thus description thereof will be omitted.

The virtual object placement part 151B is configured to place a virtual object on a spherical object on which an omnidirectional image has been drawn by the virtual sphere drawing part 150. The virtual object placement part 151B draws a video (control screen) input from the information processing device 5 on a surface of the panel object.

As a result, the panel object on which the control screen is drawn is displayed on the monitor MO.

The manipulation information output part 16 is configured to output manipulation information input from the panel manipulation part 144 to the information processing device 5.

By being notified of the manipulation information from the manipulation information output part 16, the information processing device 5 may acquire the manipulation instruction on the inside of the control screen and execute a specified process.

Although a case where the number of information processing device 5 is one has been described here, a plurality of information processing devices 5 may be connected to the virtual object manipulation device 1B.

With the configuration described above, the virtual object manipulation device 1B may present, to the user M₂ not wearing the HMD 3, a mixed-reality video that is from a different viewpoint to that of the user M₁ wearing the HMD 3. Furter, the virtual object manipulation device 1B may allow a virtual object to be manipulated even by the user M₂ not wearing the HMD 3. Further, the virtual object manipulation device 1B may manipulate a control screen of the information processing device 5 via the panel object.

The virtual object manipulation device 1B may manipulate the control screen of the information processing device 5 even in a situation where the virtual object manipulation device 1B is not synchronized with the HMD 3 or in a situation where the user M₂ is not using the HMD 3.

The virtual object manipulation device 1B may be operated by a program (virtual object control program) for causing a computer to function as each part of the controller CL described above.

### [Operation of Virtual Object Display System]

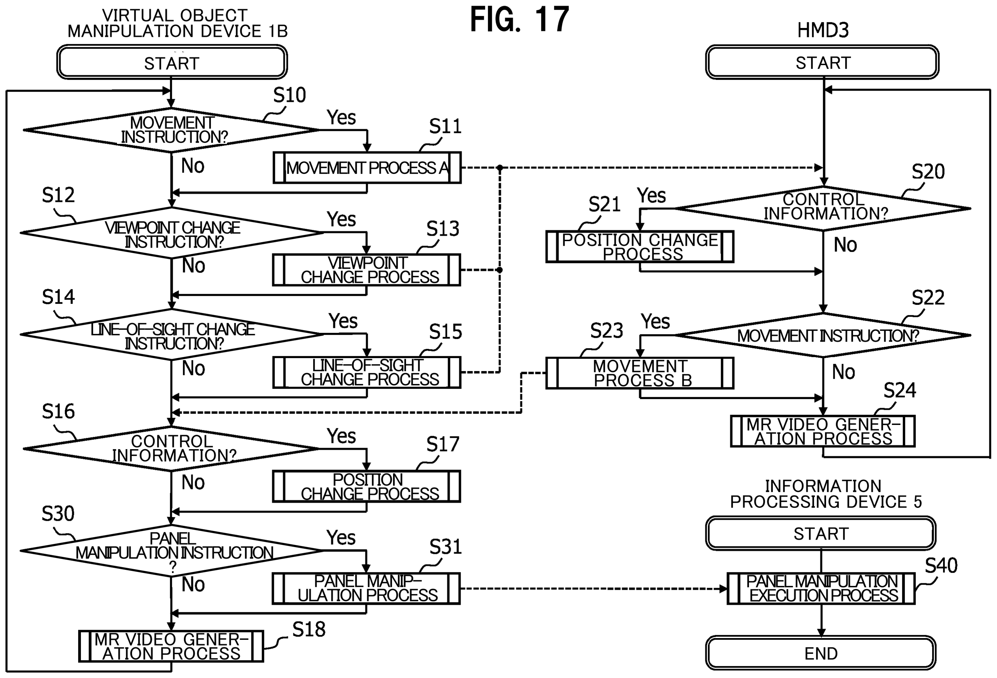

Next, operation of the virtual object display system 100B according to the second embodiment of the present invention will be described with reference to FIG. 17 (see FIGS. 14 and 16 as appropriate).

Operations of steps S10 to S18 performed by the virtual object manipulation device 1B and operations of steps S20 to S24 performed by the HMD 3 are the same as the operations of the virtual object display system 100 described with reference to FIG. 7, and thus description thereof will be omitted.

In step S30, the panel manipulation part 144 of the virtual object manipulation device 1B determines whether a manipulation instruction input to the manipulation instruction input part 13 is an instruction to manipulate an inner part of the panel object.

Here, when the manipulation instruction is an instruction to manipulate an inner part of the panel object (Yes in step S30), the virtual object manipulation device 1B proceeds to step S31. When, on the other hand, the manipulation instruction is not an instruction to manipulate an inner part of the panel object (No in step S30), the virtual object manipulation device 1B proceeds to step S18.

In step S31, the virtual object manipulation device 1B transmits the manipulation instruction as manipulation information to the information processing device 5.

In step S40, the information processing device 5 executes the content of the manipulation instruction as a panel manipulation execution process.

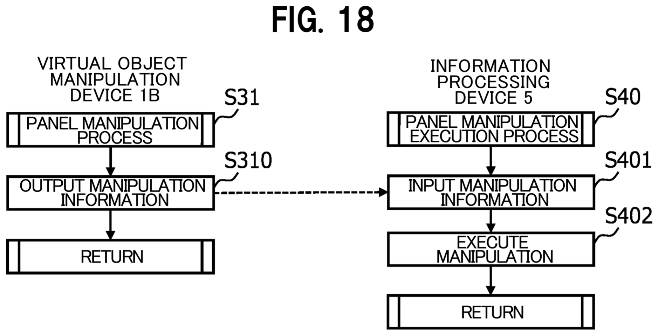

Processes of steps S31 and S40 will be described further with reference to FIG. 18.

In step S310, the panel manipulation part 144 of the virtual object manipulation device 1B outputs the inputted manipulation instruction, together with a relative position in the panel object, as manipulation information to the information processing device 5 via the manipulation information output part 16.

In step S401, the information processing device 5 receives the manipulation information that has been output in step S310.

In step S402, the information processing device 5 executes a process corresponding to the manipulation instruction on the control screen as specified by the manipulation information received in step S401.

With the configuration and operation of the virtual object display system 100B described above, in addition to the effects of the virtual object display system 100, it is possible to handle manipulation of the control screen of the information processing device 5 externally connected as manipulation on a virtual object. This allows the virtual object display system 100B to manipulate the control screen even when the information processing device 5 is located at a remote place.

### <Examples>

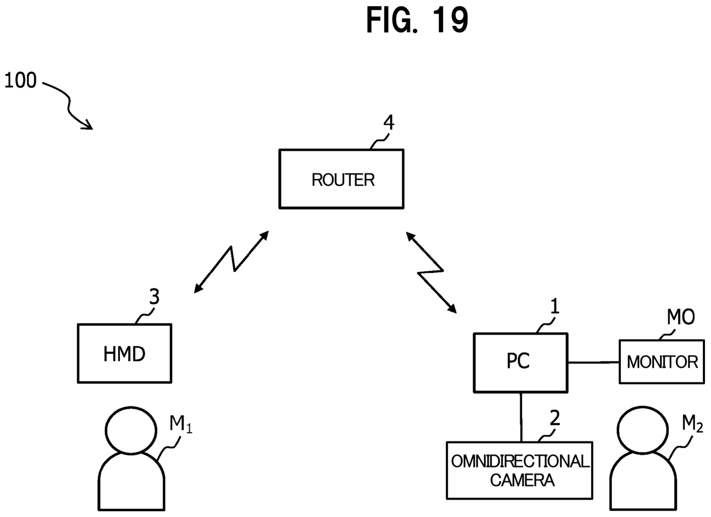

Hereinafter, examples in which the virtual object manipulation device 1 is configured by installing a virtual object control program in a personal computer (PC) will be described with reference to FIGS. 19 to 21. Hereinafter, the virtual object manipulation device 1 is referred to as a PC 1. In FIGS. 19 to 21, the mouse MS and the keyboard KB are omitted from the drawings.

FIG. 19 shows a configuration of the virtual object display system 100 shown in FIG. 1.

As shown in FIG. 1, the virtual object display system 100 may be configured by communicatively connecting (Wi-Fi connection) a PC 1, to which an omnidirectional camera 2 and a monitor MO are connected, with an HMD 3 via a router 4, which is a communication device.

To configure the virtual object display system 100B shown in FIG. 14, the information processing device 5 may be connected to the PC 1 shown in FIG. 19.

This virtual object display system 100 is a minimum configuration of the system.

With this configuration, a user M₁ wearing the HMD 3 and a user M₂ not wearing the HMD 3 may visually recognize and manipulate a virtual object.

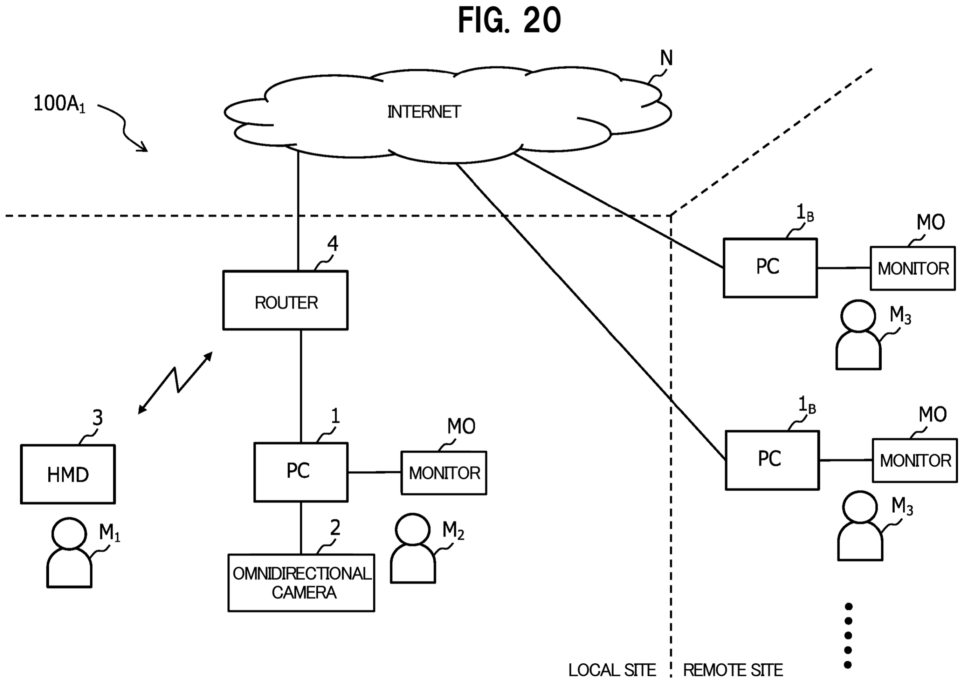

FIG. 20 shows a configuration of a virtual object display system 100A₁ that allows a virtual object to be manipulated at a remote location.

The virtual object display system 100A₁ includes a PC 1 to which an omnidirectional camera 2 and a monitor MO are connected, an HMD 3, a router 4, and a plurality of personal computers PC 1_{B}, PC 1_{B}, ..., that are connected via the Internet (a network) N. A monitor MO is connected to each PC 1_{B}.

The PC 1 and the router 4 are connected to each other with a wired connection (for example, a LAN cable). The PC 1_{B} at a remote location shares a screen using a general online meeting application with a remote operation function (for example, ZOOM [a registered trade mark]), and operates a virtual object control program of the PC 1. The PC 1 and the router 4 may be connected to each other wirelessly (for example, Wi-Fi).

The screen is a screen on which a mixed-reality video of the omnidirectional camera 2 in a specified line-of-sight direction is displayed.

With this configuration, a user M₃ at a remote location may view a virtual object using the PC 1_{B}. Further, the user M₃ may acquire an operation right of the shared screen using the remote operation function of the online meeting application, and by making a selection on that screen (such as pressing a mouse button), may acquire a manipulation right of a virtual object to manipulate the virtual object.

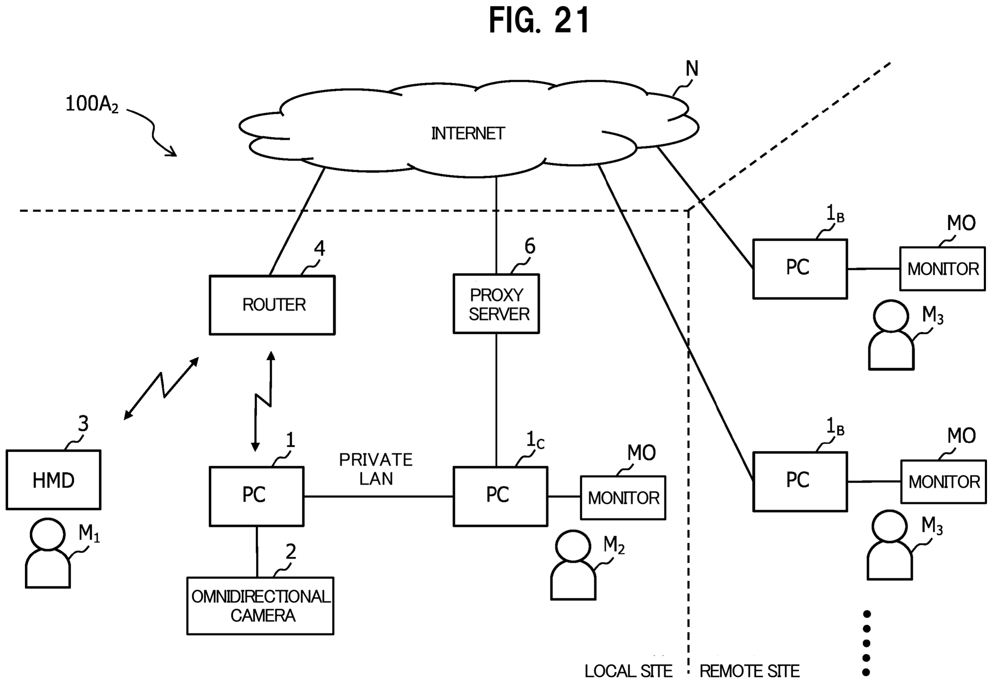

FIG. 21 shows a configuration of a virtual object display system 100A₂ that allows a virtual object to be manipulated at a remote location.

The virtual object display system 100A₁ (FIG. 20) has a configuration in which the PC 1 and the PC 1_{B} at a remote location are directly connected to the Internet N. However, in companies or the like, it is common for a proxy server to be used for connecting to the Internet N in consideration of confidentiality of a PC (PC 1_{C} or the like) connected to a network.

In the virtual object display system 100A₂, the PC 1 and the PC 1_{C} are connected to each other by a private LAN, and the PC 1_{C} and the PC 1_{B} at a remote location are connected to each other via a proxy server 6. At this time, a remote desktop function available on the private LAN is used to connect to the PC 1, enabling the virtual object control program of the PC 1 to be operated, and the screen is shared by the online meeting application to be able to be operated from another PC.

In this way, the virtual object display system 100A₂ may allow a user M₂ who is on site and a user M₃ who is at the remote location to view and manipulate a virtual object while keeping the PC (PC 1_{C} or the like) connected to the network concealed.

In the case of the configuration of the virtual object display system 100A₁ (FIG. 20) or 100A₂ (FIG. 21), a user M₁ wearing the HMD 3 may also perform a presentation using a mixed-reality video. In this case, the user M₁ may also serve as the user M₂, and may perform the presentation alone locally.

Further, in the case of the configuration of the virtual object display system 100A₁ (FIG. 20) or 100A₂ (FIG. 21), by connecting the information processing device 5 to the PC 1 and using the PC 1 as a virtual object manipulation device 1B shown in FIG. 14, a control screen of the information processing device 5 may be controlled from a remote location by using a panel object of the control screen.

In FIG. 21, a configuration has been described in which the omnidirectional camera 2 is connected to the PC 1 that is on site.

However, the omnidirectional camera 2 may be connected to a PC 1_{B} at a remote location. With the omnidirectional camera 2 connected to the PC 1_{B} at a remote location, an omnidirectional camera video may be transmitted to the PC 1_{C} that is on site using the online meeting application. The video received by the PC 1_{C} may be drawn on a monitor MO, and the video may be input to the PC 1, whereby the omnidirectional camera video of the remote location may be drawn on the spherical object in the virtual object control program running on the PC 1.

In this case, a plurality of omnidirectional cameras 2 may be used in the virtual object display system 100A₂ as a whole. By switching the display screen on the online meeting application, an omnidirectional camera video of each location may be selectively displayed on the virtual object control program.

### Reference Signs List

100, 100B Virtual object display system
1, 1B Virtual object manipulation device
10 Virtual object information storage
11 Control information transmission part
12 Control information reception part
13 Manipulation instruction input part
14 Virtual object control part
140 Right acquisition part
141 Manipulation part
142 Viewpoint change part
143 Line-of-sight change part
15 Mixed-reality video generation part
150 Virtual sphere drawing part
151 Virtual object placement part
152 Two-dimensional image generation part
2 Omnidirectional camera (omnidirectional camera)
3 HMD
30 Virtual object information storage
31 HMD main body part
32 Virtual object manipulation interface part
310 Control information transmission part
320 Control information reception part
330 Virtual object control part
331 Right acquisition part
332 Manipulation part
4 Communication device
5 Information processing device (external device)

## Claims

1. A virtual object manipulation device for manipulating a virtual object in synchronization with an HMD that displays a mixed-reality video obtained by superimposing the virtual object on a real world or a video of the real world, the virtual object manipulation device comprising:
a mixed-reality video generation part configured to generate a mixed-reality video in which the virtual object is superimposed on a video in a specified line-of-sight direction from an omnidirectional video, the omnidirectional video being input from an omnidirectional camera that captures the real world;
a manipulation instruction input part configured to receive as input a manipulation instruction to manipulate the virtual object in the mixed-reality video generated by the mixed-reality video generation part;
a manipulation part configured to perform manipulation that corresponds to the manipulation instruction on the virtual object;
a control information transmission part configured to transmit, as control information, position information of the virtual object that has been manipulated by the manipulation part to the HMD; and
a control information reception part configured to receive, as control information, position information of the virtual object that has been manipulated by the HMD.

2. The virtual object manipulation device according to claim 1, further comprising:
a viewpoint change part configured to, in response to receiving a manipulation to change a viewpoint position from the manipulation instruction input part, change a position of a viewpoint object to a position of a new-viewpoint object, wherein the viewpoint object is a virtual object indicating the viewpoint position, and wherein the new-viewpoint object is a virtual object that has been placed in advance at a position of the omnidirectional camera by a user wearing the HMD; and
a line-of-sight change part configured to, in response to receiving a manipulation to change the line-of-sight direction from the manipulation instruction input part, change a line-of-sight direction of the viewpoint object, wherein
the mixed-reality video generation part is configured to generate the mixed-reality video from a video corresponding to the line-of-sight direction in the omnidirectional video with a position of the viewpoint object as a center.

3. The virtual object manipulation device according to claim 1, wherein
the mixed-reality video generation part includes:
a virtual sphere drawing part configured to draw the omnidirectional video on a spherical object that is a virtual object;
a virtual object placement part configured to place the virtual object inside the spherical object on which the omnidirectional video is drawn; and
a two-dimensional image generation part configured to generate a two-dimensional image corresponding to the line-of-sight direction from the spherical object in which the virtual object has been placed.

4. The virtual object manipulation device according to claim 1, further comprising:
a panel manipulation part configured to output a manipulation instruction to an external device as control information in response to receiving a manipulation within a control screen of a panel object from the manipulation instruction input part, the panel object being a virtual object on which an image of the control screen of the external device is drawn, wherein
the mixed-reality video generation part is configured to receive the image of the control screen from the external device and draw the image of the control screen on the panel object.

5. A virtual object manipulation program causing a computer to function as a virtual object manipulation device according to any one of claims 1 to 4.

6. A virtual object display system, comprising:
a plurality of virtual object manipulation devices according to any one of claims 1 to 4 connected to each other via a network; and
an omnidirectional camera connected to at least one of the plurality of virtual object manipulation devices, wherein
the plurality of virtual object manipulation devices are configured to share a mixed-reality video in a specified line-of-sight direction from the omnidirectional camera.
